Europäisches Patentamt

European Patent Office

Office européen des brevets

(19)

(11) Numéro de publication : **0 124 462
B1**

(12) **FASCICULE DE BREVET EUROPÉEN**

(45) Date de publication du fascicule du brevet :
29.07.87

(51) Int. Cl.⁴ : **A 01 B 71/06**, F 16 H   3/00

(21) Numéro de dépôt : **84440017.6**

(22) Date de dépôt : **12.04.84**

(54) Machine agricole à dispositif de transmission de mouvement perfectionné.

(30) Priorité : 03.05.83 FR 8307481

(43) Date de publication de la demande :
07.11.84 Bulletin 84/45

(45) Mention de la délivrance du brevet :
29.07.87 Bulletin 87/31

(84) Etats contractants désignés :
AT DE GB IT NL

(56) Documents cités :
EP-A- 0 027 295
EP-A- 0 063 531
GB-A- 1 128 958
US-A- 2 931 451
US-A- 3 412 624
US-A- 3 463 029

(73) Titulaire : KUHN S.A.
4, Impasse des Fabriques
F-67700 Saverne (FR)

(72) Inventeur : Werner, Anton
Rue du Haut-Barr
F-67700 Saverne (FR)
Inventeur : Gantzer, Jean-Paul
128, Grand'Rue Dannelbourg
F-57820 Lutzelbourg (FR)

## Description

La présente invention concerne une machine agricole comportant des organes de travail entraînés à partir de la prise de force d'un tracteur par l'intermédiaire d'un dispositif de transmission comportant deux parties pouvant tourner l'une par rapport à l'autre autour d'un axe géométrique dirigé vers le haut, la partie primaire étant liée à un timon primaire destiné à être lié au tracteur et la partie secondaire à un timon secondaire lié au corps de la machine agricole, ladite partie primaire supportant un arbre d'entrée entraîné en rotation par la prise de force au moyen d'un arbre de transmission et lié en rotation à un arbre de sortie par l'intermédiaire d'organes de transmission, ledit arbre de sortie étant lié aux organes de travail de la machine par l'intermédiaire d'éléments de transmission.

Une telle machine agricole est décrite dans la EP-A-0 027 295.

Avec cette machine connue, il est possible de travailler en virage sans qu'il soit nécessaire d'abaisser le régime de la prise de force ou de couper la rotation de celle-ci, car l'arbre de transmission qui relie la prise de force du tracteur à l'arbre d'entrée du dispositif de transmission, n'est soumis à aucune surcharge.

Cette machine connue présente cependant l'inconvénient de ne pas pouvoir être entraînée indifféremment pas exemple à partir d'une prise de force tournant à 540 tours par minute et à partir d'une prise de force tournant à 1 000 tours par minute sans que la vitesse des organes de la machine change.

Le but de la présente invention est d'améliorer la machine agricole connue pour qu'elle puisse être entraînée indifféremment sans grande modification à partir de deux types de prises de force différentes.

Ce but est atteint par le fait que la partie primaire supporte un deuxième arbre d'entrée également lié en rotation à l'arbre de sortie par l'intermédiaire de deuxièmes organes de transmission, ledit deuxième arbre d'entrée étant destiné à être entraîné par une prise de force différente de la prise de force à partir de laquelle est destiné à être entraîné le premier arbre d'entrée, les premiers organes de transmission et les deuxièmes organes de transmission étant tels que l'arbre de sortie tourne sensiblement à la même vitesse quel que soit l'arbre d'entrée qui reçoit le mouvement, que la partie primaire et le timon primaire sont liés l'un à l'autre par des moyens de liaison cylindrique d'axe géométrique confondu avec ledit axe géométrique, de sorte que la partie primaire et le timon primaire puissent tourner l'un par rapport à l'autre autour dudit axe géométrique, que des moyens de verrouillage condamnent la rotation relative entre la partie primaire et le timon primaire pendant le travail, et que l'arbre d'entrée qui doit recevoir le mouvement de la prise de force au moyen de l'arbre de transmission, est amené en position de travail en regard dudit arbre de transmission par pivotement de la partie primaire autour de l'axe géométrique, cette position de travail de l'arbre d'entrée qui doit recevoir le mouvement étant déterminée par lesdits moyens de verrouillage.

Le dispositif de transmission de la machine agricole selon l'invention permet ainsi, à l'aide de moyens simples, d'entraîner par exemple les organes de travail de ladite machine à une même vitesse, que la prise de force tourne à 540 ou à 1 000 tours par minute.

Par ailleurs, du fait que la mise en position de travail des arbres d'entrée se fait par rotation autour de l'axe autour duquel peuvent tourner l'une par rapport à l'autre les deux parties du dispositif de transmission, permet d'avoir une construction très compacte du dispositif de transmission. La compacité de la construction résulte également du fait que le timon primaire et la partie primaire peuvent tourner l'un par rapport à l'autre sensiblement autour de l'axe autour duquel peuvent tourner les deux parties l'une par rapport à l'autre, ladite rotation pouvant être condamnée. Ceci évite en particulier l'emploi d'un deuxième timon primaire lorsque le deuxième arbre d'entrée doit recevoir le mouvement. Cette compacité de la construction présente de nombreux avantages au niveau de l'assemblage, du prix de revient et du poids, car elle permet de limiter le nombre de pièces nécessaires.

Dans le brevet US-A-3 412 624, il est décrit un carter de transmission comprenant deux arbres d'entrée, et deux arbres de sortie liés l'un à l'autre en rotation. Les arbres d'entrée de ce carter connu sont destinés à être entraînés à partir de deux types de prises de force différentes sans que la vitesse de rotation des arbres de sortie ne change. Ce carter se différencie du dispositif de transmission équipant la machine agricole de l'invention par le fait qu'il ne comporte par deux parties pouvant tourner l'une par rapport à l'autre autour d'un axe dirigé vers le haut, et dont l'une est liée à un timon primaire et l'autre à un timon secondaire. Par conséquent, il n'y a donc pas de timon primaire qui puisse tourner autour d'un axe par rapport à une partie primaire, cette rotation relative étant condamnée pendant le travail par des moyens de verrouillage qui déterminent également la position de l'arbre d'entrée qui doit recevoir le mouvement. On n'amène enfin pas l'arbre d'entrée qui doit recevoir le mouvement en position de travail par pivotement d'une partie primaire autour d'un axe après avoir déverrouillé ladite partie primaire par rapport à un timon primaire.

Avantageusement, la position de travail du deuxième arbre d'entrée est approximativement la même que celle du premier arbre d'entrée.

Le fait que les arbres d'entrée occupent, lorsqu'ils sont en position de travail, c'est-à-dire lorsqu'ils collaborent avec un arbre de transmission, approximativement la même position, est très avantageux. En effet, cela permet de déterminer à la conception de la machine, la position optimale de l'arbre d'entrée compte tenu de la position de l'arbre de prise de force du tracteur qui varie en fonction des types de tracteurs, position optimale pour que l'arbre de transmission qui lie l'arbre de prise de force au dispositif de transmission travaille dans les meilleures conditions. Grâce à l'invention, cette position peut approximativement être maintenue quel que soit l'arbre d'entrée qui travaille. De plus, cette position est donnée automatiquement dès que l'arbre d'entrée est amené dans sa position de travail sans que l'utilisateur ait besoin de faire un réglage manuel supplémentaire, ce qui supprime le risque d'erreur.

Avantageusement, la liaison entre le timon primaire et la partie primaire se fait au moyen d'un organe de liaison qui est centré sur un moyeu solidaire de la partie secondaire et dont l'axe longitudinal est confondu avec l'axe autour duquel peuvent tourner les deux parties l'une par rapport à l'autre, ledit organe de liaison pouvant tourner sur ledit moyeu. Cet agencement est particulièrement avantageux car ledit moyeu est un élément de la partie secondaire solidaire du timon secondaire. En effet, l'effort de traction exercé sur le timon primaire est donc directement transmis par l'organe de liaison dans le timon secondaire par l'intermédiaire de la partie secondaire. On évite ainsi une sollicitation trop importante des organes de transmission qui transmettent le mouvement à l'intérieur du dispositif de transmission.

Selon une caractéristique supplémentaire, le dispositif de transmission est muni d'une béquille qui supporte le timon de la machine agricole lorsque celle-ci est désaccouplée du tracteur. Cette béquille est avantageusement fixée sur la partie primaire. Cet agencement présente un grand avantage à l'attelage de la machine au tracteur. En effet, tout le poids supporté par la béquille passe du timon dans le sol par l'intermédiaire de la béquille. Ainsi, en désolidarisant l'organe de liaison qui est lié au timon primaire, et la partie primaire, on peut pivoter l'ensemble organe de liaison-timon primaire autour du moyeu de la partie secondaire pour amener le timon primaire sensiblement en face de l'attelage du tracteur. Ce pivotement est très facile car il n'y a pas à vaincre de force de frottement dû au poids supporté par la béquille, puisque cette dernière ne bouge pas lorsque le timon primaire est amené en face de l'attelage.

Selon une autre caractéristique, la béquille fournit une protection de l'arbre d'entrée qui ne travaille pas, lorsque ladite béquille est en position de repos.

D'autres caractéristiques et avantages de l'invention apparaîtront dans la description suivante nullement limitative d'une forme de réalisation de l'invention en référence aux dessins annexés sur lesquels :

La figure 1 représente une machine agricole selon l'invention attelée à un tracteur,

La figure 2 représente une vue en coupe du dispositif de transmission de la machine agricole selon l'invention, lorsque le premier arbre d'entrée est en position de travail,

La figure 3 représente une partie d'une vue en coupe du dispositif de transmission de la machine agricole selon l'invention, lorsque le deuxième arbre d'entrée est en position de travail,

La figure 4 représente une vue latérale du dispositif de transmission,

La figure 5 représente une vue en perspective du dispositif de transmission.

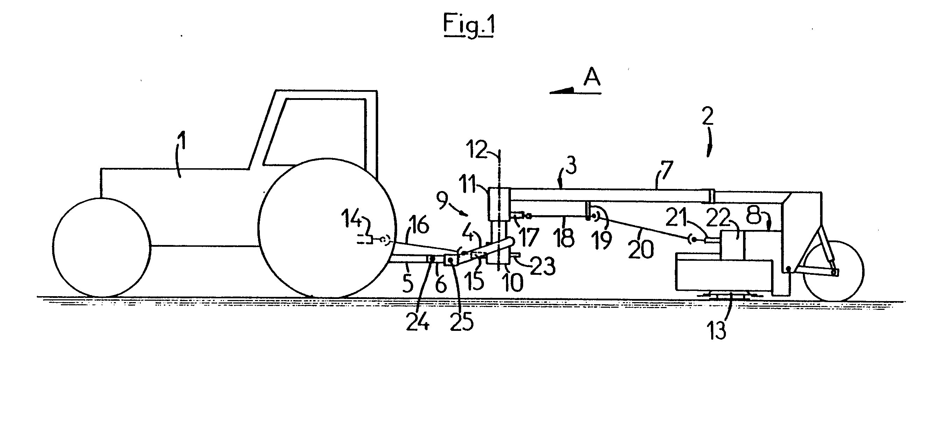

Sur la figure 1 est représenté un ensemble agricole composé par un tracteur (1) et une machine agricole (2). Cette machine agricole (2) est munie d'un timon (3) qui permet sa liaison au tracteur (1). Le timon (3) se compose d'un timon primaire (4) ayant avantageusement la forme d'un U en vue en plan de sorte que chaque branche du U puisse être liée à un bras inférieur (5) de l'attelage du tracteur (1). La liaison entre chaque branche du U au bras inférieur (5) correspondant est réalisée par l'intermédiaire d'un tenon oscillant (6). Le timon (3) comporte par ailleurs un timon secondaire (7) qui est relié au corps (8) de la machine agricole (2). Le timon primaire (4) et le timon secondaire (7) sont décalés dans le plan vertical et sont reliés entre eux par un dispositif de transmission (9). Le dispositif de transmission (9) est formé de deux parties (10, 11) qui peuvent tourner l'une par rapport à l'autre autour d'un axe géométrique (12) dirigé vers le haut. L'axe (12) est de préférence sensiblement vertical. La partie primaire (10) du dispositif de transmission (9) est reliée au timon primaire (4) et la partie secondaire (11) est reliée au timon secondaire (7). L'entraînement en rotation des organes de travail (13) de la machine agricole (2) se fait à partir de l'arbre de prise de force (14) du tracteur (1). Cet arbre de prise de force (14) est relié à un arbre d'entrée (15) supporté par la partie primaire (10) du dispositif de transmission (9), au moyen d'un arbre de transmission à joints universels (16). Le mouvement est transmis à l'intérieur du dispositif de transmission (9) depuis l'arbre d'entrée (15) à l'arbre de sortie (17) par un mécanisme qui sera décrit plus loin. L'arbre de sortie (17) est relié à un arbre (18) qui est supporté à son extrémité opposée à celle avec laquelle il collabore avec l'arbre de sortie (17), par un support (19) solidaire du timon secondaire (7). L'arbre (18) est couplé à un deuxième arbre de transmission à joints universels (20) qui collabore avec l'arbre d'entrée (21) du carter d'entraînement (22) qui équipe le corps (8) de la machine agricole (2). La partie primaire (10) du dispositif de transmission (9) comporte par ailleurs un deuxième arbre d'entrée (23) dont la fonction sera expliquée ultérieurement.

Comme dit plus haut, la partie primaire (10) du dispositif de transmission (9) est reliée au timon primaire (4), tandis que la partie secondaire (11) est reliée au timon secondaire (7).

Ainsi, comme la partie primaire (10) et la partie secondaire (11) peuvent tourner l'une par rapport à l'autre autour de l'axe (12), le timon primaire (4) et le timon secondaire (7) peuvent également tourner l'un par rapport à l'autre autour dudit axe (12).

Par ailleurs, comme dit plus haut également, le timon primaire (4) est relié aux bras inférieurs (5) de l'attelage du tracteur par l'intermédiaire des tenons oscillants (6). Ces tenons oscillants (6) sont respectivement reliés aux bras inférieurs (5) et au timon primaire (4) par des articulations (24 et 25).

Avec une telle construction, la machine agricole (2) possède divers degrés de liberté par rapport au tracteur (1), à savoir :

rotation autour de l'axe (24) et/ou autour de l'axe (25), de sorte que la machine agricole (2) peut se déplacer dans un plan sensiblement vertical par rapport au tracteur (1),

rotation autour d'un axe sensiblement parallèle au sens de travail A grâce aux axes (24, 25) des tenons oscillants (6),

rotation autour de l'axe (12) de sorte que la machine (2) peut se déplacer dans un plan sensiblement horizontal par rapport au tracteur (1).

Les deux premières rotations n'ont qu'une amplitude limitée et permettent à la machine agricole (2) de s'adapter parfaitement aux irrégularités du terrain indépendamment du tracteur (1). Cet agencement confère également plus de sécurité à l'ensemble tracteur (1) - machine agricole (2). En effet, si le poids de la machine agricole (2) est relativement important et si le terrain est très accidenté, il y a moins de risque que la machine (2) provoque le renversement du tracteur (1).

La troisième rotation qui permet la négociation de virages peut avoir une amplitude très importante, de l'ordre de 90° voire plus. Mais, compte tenu de l'agencement particulier du dispositif de transmission (9), l'arbre de transmission (16) qui relie l'arbre de prise de force (14) à l'arbre d'entrée (15 ou 23) de la partie primaire (10), ne subit aucune contrainte.

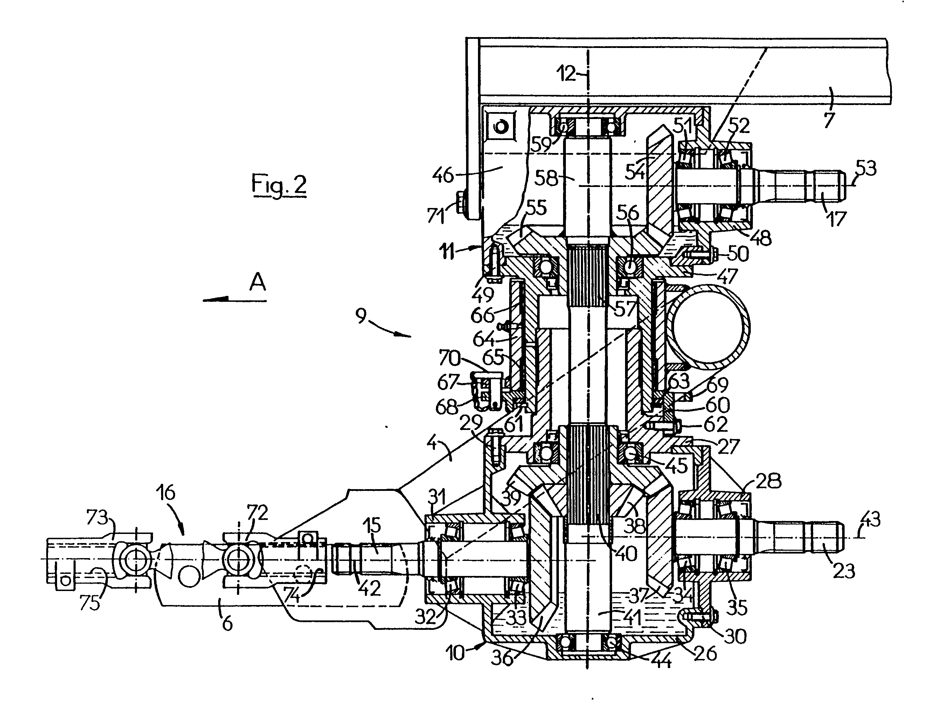

Le dispositif de transmission (9) est représenté en coupe sur la figure 2. La partie primaire (10) se compose d'un carter primaire (26) sur lequel sont montés un moyeu primaire (27) et un palier à bride primaire (28). Le moyeu primaire (27) et le palier à bride primaire (28) sont fixés sur le carter primaire (26) respectivement au moyen de vis (29 et 30) dont une seule de chaque est représentée sur la figure 2. L'axe longitudinal du moyeu primaire (27) est confondu avec l'axe (12).

Le carter primaire (26) comporte en sus un palier (31). Le palier (31) sert au guidage en rotation et au maintien en translation du premier arbre d'entrée (15) au moyen de roulements (32, 33), tandis que le palier à bride primaire (28) sert au guidage en rotation et au maintien en translation du deuxième arbre d'entrée (23) au moyen de roulements (34, 35). Le montage des roulements (32, 33, 34, 35) est à la portée de l'homme de l'art. L'extrémité des arbres d'entrée (15, 23) qui s'étend à l'intérieur du carter primaire (26), est munie l'une d'une roue conique (36) et l'autre d'une roue conique (37). La roue conique (36) engrène avec une roue conique (38), tandis que la roue conique (37) engrène avec une roue conique (39). Les roues coniques (38, 39) sont liées en rotation au moyen de cannelures (40) à un arbre intermédiaire (41) dont l'axe longitudinal est sensiblement confondu avec l'axe ( 12) autour duquel peuvent tourner l'une par rapport à l'autre, les deux parties (10, 11). L'axe longitudinal de l'arbre intermédiaire (41) est sensiblement perpendiculaire à l'axe de rotation (42) du premier arbre d'entrée (15) et à l'axe de rotation (43) du deuxième arbre d'entrée (23). L'arbre intermédiaire (41) est guidé en rotation dans le carter primaire (26) par l'intermédiaire de roulements (44, 45).

La partie secondaire (11) se compose d'un carter secondaire (46) sur lequel sont montés un moyeu secondaire (47) et un palier à bride secondaire (48). Le moyeu secondaire (47) et le palier à bride secondaire (48) sont fixés sur le carter secondaire (46) respectivement au moyen de vis (49 et 50) dont une seule de chaque est représentée sur la figure 2. L'axe longitudinal du moyeu secondaire (47) est confondu avec l'axe (12).

Le palier à bride secondaire (48) sert au guidage en rotation et au maintien en translation de l'arbre de sortie (17) au moyen de roulements (51, 52) dont le montage est à la portée de l'homme de l'art. L'axe de rotation (53) de l'arbre de sortie (17) est sensiblement perpendiculaire à l'axe longitudinal de l'arbre intermédiaire (41) et sensiblement parallèle aux axes (42, 43). L'extrémité de l'arbre de sortie (17) qui s'étend à l'intérieur du carter secondaire (46), est munie d'une roue conique (54) qui engrène avec une roue conique (55) guidée en rotation dans le moyeu secondaire (47) à l'aide d'un roulement (56). La roue conique (55) est liée en rotation à l'arbre intermédiaire (41) au moyen de cannelures (57). La roue conique (55) est par ailleurs liée rigidement à l'extrémité d'un arbre (58) dont l'autre extrémité est guidée en rotation dans le carter secondaire (46) au moyen d'un roulement (59). L'axe longitudinal de l'arbre (58) est sensiblement dans le prolongement de l'axe longitudinal de l'arbre intermédiaire (41).

Le moyeu primaire (27) est centré en partie à l'intérieur du moyeu secondaire (47), de sorte que les deux moyeux (27, 47) peuvent tourner l'un par rapport à l'autre autour de l'axe (12). Le moyeu primaire (27) est lié en translation au moyeu secondaire (47) au moyen d'une couronne (60) et d'un circlips (61). La couronne (60) est liée au moyeu primaire (27) grâce à des vis (62) dont une seule est représentée. Comme la couronne ( 60) qui est solidaire du moyeu primaire (27), tourne par rapport au circlips (61) qui est solidaire du moyeu secondaire (47), une rondelle (63) a été interposée entre ladite couronne (60) et ledit circlips (61).

Sur l'extérieur du moyeu secondaire (47) est centré un palier support (64) à l'aide de deux coussinets (65, 66), de sorte que celui-ci puisse tourner par rapport au moyeu secondaire (47). L'axe longitudinal du palier support (64) est sensiblement confondu avec l'axe (12). La rotation entre le palier support (64) et le moyeu primaire (27) peut être condamnée. A cet effet, le palier support (64) comporte un œilleton (67) muni d'un trou, tandis que la couronne (60) comporte deux œilletons (68, 69) également munis d'un trou, une goupille (70) s'étendant à travers l'œilleton (67) et l'un des œilletons (68 ou 69). Le palier support (64) est lié rigidement au timon primaire (4) au moyen de vis par exemple (voir figure 5) et sert d'organe de liaison entre ledit timon primaire (4) et la partie primaire (10). De même, le carter secondaire (46) est lié au timon secondaire (7) par des vis (71) dont une seule est représentée sur la figure 2. L'agencement du palier support (64) sur le moyeu secondaire (47) est particulièrement avantageux car l'effort de traction exercé sur le timon primaire (4) passe ainsi directement dans le timon secondaire (7) par l'intermédiaire de la partie secondaire (11). Si le timon primaire (4) avait été relié à la partie primaire (10), l'effort de traction aurait dû être transmis du moyeu primaire (27) au moyeu secondaire (47), ce qui aurait pu provoquer des contraintes dans l'arbre intermédiaire (41), compte tenu des jeux de fonctionnement existant entre lesdits moyeux (27 et 47).

Les arbres d'entrée (15, 23) ont avantageusement des profils différents et leurs axes longitudinaux (42 et 43) sont approximativement dans le prolongement l'un de l'autre.

L'arbre de transmission (16) comporte deux mâchoires (72, 73) munies l'une d'un alésage (74) et l'autre d'un alésage (75). Le profil de l'alésage (74) est le complémentaire du profil du premier arbre d'entrée (15), tandis que le profil de l'alésage (75) est le complémentaire du profil du deuxième arbre d'entrée (23).

Les arbres d'entrée (15 et 23) sont prévus pour être entraînés à des régimes de rotation différents, tout en ayant un régime de rotation de l'arbre de sortie (17) sensiblement constant, donc un régime de rotation de l'arbre intermédiaire (41) également sensiblement constant. Les rapports de transmission des couples coniques (36, 38) et des couples coniques (37, 39) doivent donc avoir les valeurs adéquates pour obtenir ce résultat.

Actuellement, la plupart des tracteurs ont un arbre de prise de force qui tourne à 540 tours par minute ou un arbre de prise de force qui tourne à 1000 tours par minute. L'arbre de prise de force qui tourne à 540 tours par minute, possède un profil à 6 cannelures droites, tandis que l'arbre de prise de force qui tourne à 1000 tours par minute, possède en général un profil à 21 cannelures en développante. Dans ce but, le premier arbre d'entrée (15) qui est prévu pour être entraîné à 540 tours par minute, possède un profil à 21 cannelures en développante, tandis que le deuxième arbre d'entrée (23) qui est prévu pour être entraîné à 1000 tours par minute, possède un profil à 6 cannelures droites.

De même, l'alésage (74) de la mâchoire (72) qui est destinée à être accouplée avec le premier arbre d'entrée (15), possède 21 cannelures en développante, tandis que l'alésage (75) de la mâchoire (73) qui est destinée à être accouplée avec le deuxième arbre d'entrée (23), possède 6 cannelures droites. Si l'arbre de sortie (17) doit tourner à environ 1000 tours par minute, il s'en déduit que le rapport de transmission du couple conique (54, 55) est sensiblement égal au rapport de transmission du couple conique (37, 39). Dans le cas des régimes de rotation indiqués dans cet exemple, un encombrement réduit des couples coniques (36, 38) et (37, 39) est obtenu lorsque l'arbre intermédiaire (41) tourne à environ 740 tours par minute. Avec un tel dispositif de transmission, il est possible de travailler à plein régime avec la machine agricole (2) lors de la négociation de virages sans qu'il n'y ait de risque d'endommager l'arbre de transmission (16). En effet, l'ensemble formé par la partie primaire (10), la couronne (60), le palier support (64), le timon primaire (4) et l'arbre de transmission (16) reste, vu en plan, toujours en alignement avec l'axe longitudinal du tracteur (1). Lors de la négociation d'un virage, tout l'ensemble qui vient d'être défini ci-dessus, tourne autour du moyeu secondaire (47), c'est-à-dire autour de l'axe (12).

Dans le cas de la figure 2, le dispositif de transmission (9) de la machine agricole (2) est réglé pour être entraîné par un tracteur (1) dont l'arbre de prise de force (14) tourne à 540 tours par minute et dont le profil comporte 6 cannelures droites. Ceci est possible car l'alésage (75) possède également 6 cannelures droites.

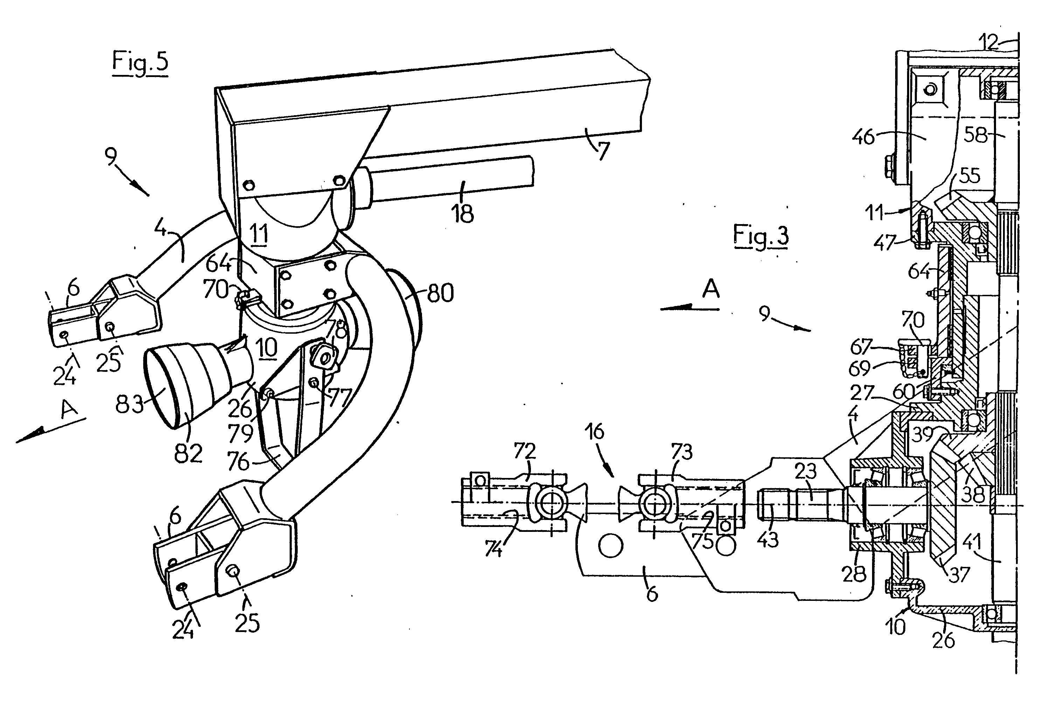

Si la machine agricole (2) doit être entraînée par un tracteur (1) dont l'arbre de prise de force (14) tourne à 1 000 tours par minute et dont le profil comporte 21 cannelures en développante, le dispositif de transmission (9) doit être réglé comme indiqué sur la figure 3, de sorte que ce soit le deuxième arbre d'entrée (23) qui soit à l'avant pour pouvoir être accouplé à l'arbre de transmission (16) qui aura été retourné de sorte que la mâchoire (73) collabore avec ledit deuxième arbre d'entrée (23) et la mâchoire (72) avec l'arbre de prise de force (14) du tracteur (1).

Pour ce faire,

on débranche l'arbre de transmission (16),

on désolidarise le palier support (64) de la couronne (60) en retirant la goupille (70) des œilletons (67 et 68),

on fait tourner toute la partie primaire (10) autour de l'axe (12) en maintenant le palier support (64) et le timon primaire (4) en place jusqu'à ce que l'œilleton (69) se trouve en face de l'œilleton (67),

on verrouille à nouveau le palier support (64) et la couronne (60) à l'aide de la goupille (70),

on branche l'arbre de transmission (16) de sorte que la mâchoire (72) collabore avec l'arbre de prise de force (14) du tracteur (1) et la mâchoire (73) avec le deuxième arbre d'entrée (23). Ceci est possible car l'alésage (74) de la mâchoire (72) a un profil à 21 cannelures en développante et l'alésage (75) de la mâchoire (73), un profil à 6 cannelures droites.

Comme cela est visible, cette adaptation du dispositif de transmission (9) à l'arbre de prise de force (14) du tracteur (1) se fait sans aucun outillage.

Les arbres d'entrée (15 et 23) occupent, lorsqu'ils sont en position de travail, c'est-à-dire lorsqu'ils collaborent avec l'arbre de transmission (16), approximativement la même position. Cet avantage est particulièrement intéressant car il permet de déterminer à la conception la position optimale de l'arbre d'entrée compte tenu de la position des arbres de prise de force des tracteurs, position qui varie en fonction des types de tracteurs, pour que l'arbre de transmission (16) travaille dans les meilleures conditions. Grâce à l'invention cette position peut approximativement être maintenue quel que soit l'arbre d'entrée (15 ou 23) qui travaille. De plus, cette position est donnée automatiquement dès que l'arbre d'entrée (15 ou 23) est mis en position de travail, sans que l'utilisateur ait besoin de faire un réglage manuel supplémentaire, ce qui supprime tout risque d'erreur.

Par ailleurs, du fait que la mise en position de travail des arbres d'entrée (15 ou 23) se fait par rotation autour de l'axe (12) et que la partie primaire (10) et le timon primaire (4) peuvent être désolidarisés et peuvent tourner l'un par rapport à l'autre autour dudit axe (12), permet d'avoir une construction très compacte du dispositif de transmission (9), ce qui présente bien des avantages au niveau de l'assemblage, du prix de revient et du poids.

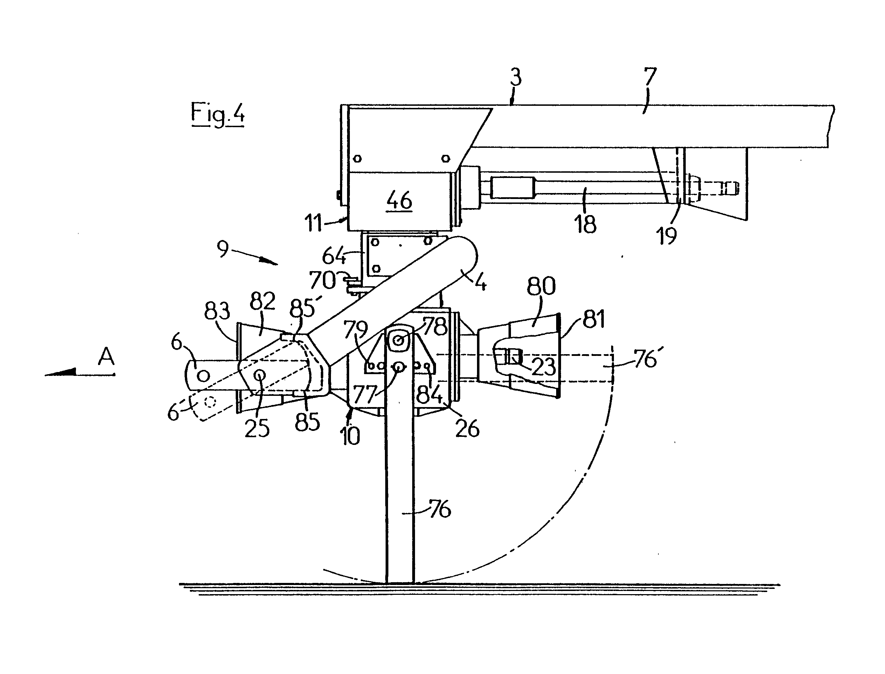

La figure 4 est une vue latérale du dispositif de transmission (9). L'avantage de l'arbre (18) qui est supporté par l'arbre de sortie (17) et le support (19), est de raccourcir la longueur de l'arbre de transmission à joints universels (20) pour que l'amplitude des vibrations auxquelles est soumis cet arbre (20) lorsqu'il tourne, reste assez faible dans le but de ne pas endommager cet arbre (20). Tel que visible sur la figure 1, la longueur de l'arbre (18) est avantageusement sensiblement la même que celle de l'arbre (20). En effet, si on avait directement branché un arbre de transmission (20) entre l'arbre de sortie (17) et l'arbre d'entrée (21), l'amplitude des vibrations aurait été telle, compte tenu de la grande longueur de cet arbre, qu'elle provoquerait rapidement sa rupture, ce qui pourrait provoquer un accident corporel si une personne se trouvait dans le voisinage de la machine.

Sur la figure 4, on voit également que le dispositif de transmission (9) supporte une béquille (76). Cette béquille (76) est reliée au carter primaire (26) au moyen d'un axe d'articulation (77) et d'une vis (78). Telle que dessinée sur la figure 4, la machine agricole se trouve désaccouplée du tracteur et l'avant de son timon (3) repose sur le sol au moyen de la béquille (76). Lorsque la machine a été accouplée aux bras inférieurs (5) du tracteur, la béquille (76) est pivotée en position de repos. Pour ce faire, on dévisse la vis (78), on fait pivoter la béquille (76) dans la position (76') par exemple et on verrouille la béquille (76) dans cette position en vissant la vis (78) dans un trou (79) prévu à cet effet dans le carter primaire (26). Tel que visible sur la figure 5, la béquille (76) a la forme d'un U. Avec cette forme, la béquille (76) peut avantageusement servir de protection supplémentaire de l'arbre d'entrée (15 ou 23) qui ne travaille pas. Sur la figure 4, c'est le deuxième arbre d'entrée (23) qui ne travaille pas. Néanmoins, cet arbre tourne tel que cela est déductible de la figure 2. Pour éviter ainsi tout risque d'accident, l'arbre d'entrée (23) est entouré d'un bol (80) ouvert à son extrémité (81), ouverture que la béquille (76) pourra partiellement boucher, en tout cas suffisamment pour qu'on ne puisse que difficilement accéder à l'arbre d'entrée (23), voire pas du tout. Le premier arbre d'entrée (15) est également entouré d'un bol (82) dont l'ouverture (83) pourra également être partiellement bouchée par la béquille (76) lorsque cet arbre ne travaille pas. Pour cela on pivotera simplement la béquille (76) vers l'arbre d'entrée (15) et on la verrouillera dans cette position en vissant la vis (78) dans le trou (84) prévu à cet effet dans le carter primaire (26).

Comme dit plus haut, la béquille (76) supporte l'avant du timon (3). Ceci présente un grand avantage à l'attelage de la machine agricole (2) au tracteur (1). En effet, tout le poids supporté par ladite béquille (76) passe du timon (3) dans le sol par l'intermédiaire de la partie secondaire (11), de la partie primaire (10) et de la béquille (76). Ainsi, en neutralisant la goupille (70), on désolidarise le palier support (64) et le timon primaire (4), de la partie primaire (10), donc du carter primaire (26), de sorte qu'on peut alors tourner l'ensemble palier support (64) - timon primaire (4) autour du moyeu secondaire (47) pour amener les tenons oscillants (6) du timon primaire (4) sensiblement en face des bras inférieurs (5) de l'attelage du tracteur (1). Cette rotation est très facile car il n'y a pas à vaincre de force de frottement dû au poids supporté par la béquille (76), puisque cette dernière ne bouge pas lorsque le timon primaire (4) est amené en face de l'attelage du tracteur (1).

Sur la figure 4, on voit aussi que la rotation des tenons oscillants (6) autour des axes (25) est limitée par deux butées (85 et 85') de sorte que les tenons oscillants (6) peuvent prendre une position quelconque entre les positions extrêmes (6 et 6').

Le dispositif de transmission (9) qui vient d'être décrit, permet d'entraîner les organes de la machine (2) indifféremment à partir de tracteurs dont l'arbre de prise de force tourne à 540 tours par minute et qui a un profil à 6 cannelures droites, ou à partir de tracteurs dont l'arbre de prise de force tourne à 1000 tours par minute et qui a un profil à 21 cannelures en développante. Il existe également des tracteurs de haute puissance dont les arbres de prise de force tournent à 1000 tours par minute mais qui ont un profil soit à 6 cannelures droites d'un diamètre plus grand que le précédent à 6 cannelures, soit à 20 cannelures en développante. Il est par conséquent évident qu'on pourra également faire un dispositif de transmission dont les arbres d'entrée auront de tels profils, les rapports de transmission des couples coniques logés dans ledit dispositif de transmission étant déterminés en conséquence.

Il est par ailleurs également évident que les arbres d'entrée (15, 23) pourront avoir le même profil. Dans ce cas, il faudra changer l'arbre de transmission (16) en fonction du profil de l'arbre de prise de force (14) du tracteur (1).

Il est d'autre part évident que toutes les combinaisons entre les différents profils sont possibles.

Il est également évident que les profils peuvent être différents de tous ceux qui ont été cités précédemment.

Il est par ailleurs possible que les moyens d'entraînement situés dans le dispositif de transmission soient différents de ceux décrits. En effet, le couple conique (54, 55), l'arbre de sortie (17), l'arbre (18), l'arbre de transmission (20) et l'arbre d'entrée (21) peuvent être remplacés par une poulie située à l'extrémité supérieure de l'arbre intermédiaire (41), une courroie et une poulie située à l'entrée du carter d'entraînement (22) de la machine.

## Revendications

1. Machine agricole (2) comportant des organes de travail (13) entraînés à partir de la prise de force (14) d'un tracteur (1) par l'intermédiaire d'un dispositif de transmission (9) comportant deux parties (10, 11) pouvant tourner l'une par rapport à l'autre autour d'un axe géométrique (12) dirigé vers le haut, la partie primaire (10) étant liée à un timon primaire (4) destiné à être lié au tracteur (1) et la partie secondaire (11), à un timon secondaire (7) lié au corps (8) de la machine agricole (2), ladite partie primaire (10) supportant un arbre d'entrée (15) entraîné en rotation par la prise de force (14) au moyen d'un arbre de transmission (16) et lié en rotation à un arbre de sortie (17) par l'intermédiaire d'organes de transmission (36, 38, 41, 55, 54), ledit arbre de sortie (17) étant lié aux organes de travail (13) de la machine (2) par l'intermédiaire d'éléments de transmission (18, 20, 21, 22), caractérisée par le fait que la partie primaire (10) supporte un deuxième arbre d'entrée (23) également lié en rotation à l'arbre de sortie (17) par l'intermédiaire de deuxièmes organes de transmission (37, 39, 41, 55, 54), ledit deuxième arbre d'entrée (23) étant destiné à être entraîné par une prise de force (14) différente de la prise de force (14) à partir de laquelle est destiné à être entraîné le premier arbre d'entrée (15), les premiers organes de transmission (36, 38, 41, 55, 54) et les deuxièmes organes de transmission (37, 39, 41, 55, 54) étant tels que l'arbre de sortie (17) tourne sensiblement à la même vitesse quel que soit l'arbre d'entrée (15 ou 23) qui reçoit le mouvement, que la partie primaire (10) et le timon primaire (4) sont liés l'un à l'autre par des moyens de liaison cylindrique (64, 65, 66, 47, 27) d'axe géométrique confondu avec ledit axe géométrique (12), de aorte que la partie primaire (10) et le timon primaire (4) puissent tourner l'un par rapport à l'autre autour dudit axe géométrique (12), que des moyens de verrouillage (67, 68, 69, 70) condamnent la rotation relative entre la partie primaire (10) et le timon primaire (4) pendant le travail, et que l'arbre d'entrée (15, 23) qui doit recevoir le mouvement de la prise de force (14) au moyen de l'arbre de transmission (16), est amené en position de travail en regard dudit arbre de transmission (16) par pivotement de la partie primaire (10) autour de l'axe géométrique (12), cette position de travail de l'arbre d'entrée (15, 23) qui doit recevoir le mouvement étant déterminée par lesdits moyens de verrouillage (67, 68, 69, 70).

2. Machine agricole selon la revendication 1, caractérisée par le fait que la position de travail du deuxième arbre d'entrée (23) est approximativement la même que celle du premier arbre d'entrée (15).

3. Machine agricole selon la revendication 1 ou 2, caractérisée par le fait que la liaison entre la partie primaire (10) et le timon primaire (4) se fait au moyen d'un organe de liaison (64), lequel est centré sur un moyeu (47) solidaire de la partie secondaire (11) et dont l'axe longitudinal est confondu avec l'axe (12), ledit organe de liaison (64) pouvant tourner sur ledit moyeu (47).

4. Machine agricole selon la revendication 3, caractérisée par le fait que la partie primaire (10) comporte un moyeu (27) centré à l'intérieur du moyeu (47) de la partie secondaire (11), et que l'organe de liaison (64) est centré sur l'extérieur dudit moyeu (47) de la partie secondaire (11).

5. Machine agricole selon l'une des revendications précédentes, caractérisée par le fait que les deux arbres d'entrée (15, 23) sont supportés par deux faces opposées de la partie primaire (10).

6. Machine agricole selon la revendication 5, caractérisée par le fait que les deux arbres d'entrée (15, 23) sont approximativement dans le prolongement l'un de l'autre.

7. Machine agricole selon l'une des revendications précédentes, caractérisée par le fait que les deux arbres d'entrée (15, 23) ont des profils différents.

8. Machine agricole selon l'une des revendications précédentes, caractérisée par le fait que les premiers organes de transmission comportent un premier couple conique (36, 38) et que les deuxièmes organes de transmission comportent un deuxième couple conique (37, 39), ledit premier couple conique (36, 38) transmettant le mouvement entre le premier arbre d'entrée (15) et un arbre intermédiaire (41), et ledit deuxième couple conique (37, 39) transmettant le mouvement entre le deuxième arbre d'entrée (23) et ledit arbre intermédiaire (41), cet arbre intermédiaire (41) ayant un axe de rotation confondu avec l'axe géométrique (12) et étant commun aux premiers et aux deuxièmes organes de transmission.

9. Machine agricole selon la revendication 8, caractérisée par le fait que les roues coniques entraînées (38, 39) sont agencées l'une au-dessus de l'autre, sur l'arbre intermédiaire (41).

10. Machine agricole selon l'une des revendications 8 ou 9, caractérisée par le fait que l'arbre intermédiaire (41) tourne sensiblement à la même vitesse quel que soit l'arbre d'entrée (15 ou 23) qui reçoit le mouvement.

11. Machine agricole selon la revendication 10, caractérisée par le fait que l'arbre intermédiaire (41) tourne à environ 740 tours par minute lorsque l'arbre de sortie (17) tourne à environ 1000 tours par minute.

12. Machine agricole selon l'une des revendications précédentes, caractérisée par le fait qu'elle comporte une béquille (76) fixée sur la partie primaire (10).

13. Machine agricole selon l'une des revendications précédentes, caractérisée par le fait qu'elle comporte une béquille (76) qui, en position relevée, sert de moyen de protection de l'arbre d'entrée (15 ou 23) qui ne travaille pas.

14. Machine agricole selon l'une des revendications précédentes, caractérisée par le fait que la liaison entre l'arbre de sortie (17) et l'arbre d'entrée (21) du carter d'entraînement (22) équipant le corps (8) de la machine (2) se fait au moyen de deux arbres de transmission (18, 20) dont l'un est supporté par le timon (3).

15. Machine agricole selon la revendication 14, caractérisée par le fait que le longueur desdits arbres de transmission (18 et 20) est sensiblement la même.


## Claims

1. Agricultural machine (2) comprising working organs (13) driven by the power take off (14) of a tractor (1) by means of a transmission device (9) which comprises two portions (10, 11) able to turn one in respect to the other about an upwardly directed geometrical axis (12), the first portion (10) being connected to a first drawbar (4) arranged to be connected to the tractor (1), and the second portion (11) being connected to a second drawbar (7) connected to the body (8) of the agricultural machine (2), said first portion (10) supporting an input shaft (15) which is driven in rotation by the power take off (14) by means of a transmission shaft (16), and which is connected in rotation to an output shaft (17) by means of transmission organs (36, 38, 41, 55, 54), said output shaft (17) being connected to the working organs (13) of the machine (2) by means of transmission elements (18, 20, 21, 22), characterized by the fact that the first portion (10) supports à second input shaft (23) which is also connected in rotation to the output shaft (17) by means of second transmission organs (37, 39, 41, 55, 54), said second input shaft (23) being adapted to be driven by a power take off (14) different from the power take off (14) by which the first input shaft (15) is adapted to be driven, the first transmission organs (36, 38, 41, 55, 54) and the second transmission organs (37, 39, 41, 55, 54) being such that the output shaft (17) turns approximately at the same speed independently of the input shaft (15 or 23) which receives the movement, that the first portion (10) and the first drawbar (4) are connected to each other by cylindrical connecting means (64, 65, 66, 47, 27) whose geometrical axis is conformable with said geometrical axis (12), so that the first portion (10) and the first drawbar (4) can turn one in respect to the other about said geometrical axis (12), that locking means (67, 68, 69, 70) locks the relative rotation between the first portion (10) and the first drawbar (4) during working, and that the input shaft (15, 23) which has to receive the movement from the power take off (14) by means of the transmission shaft (16), is brought in its working position opposite said transmission shaft (16) by pivoting the first portion (10) about the geometrical axis (12), this working position of the input shaft (15, 23) which has to receive the movement, being determined by said locking means (67, 68, 69, 70).

2. Agricultural machine as claimed in claim 1, characterized by the fact that the working position of the second input shaft (23) is approximately the same as that of the first input shaft (15).

3. Agricultural machine as claimed in claim 1 or 2, characterized by the fact that the connection between the first portion (10) and the first drawbar (4) is made by means of a connecting organ (64), which is centered on a hub (47) connected to the second portion (11) and whose longitudinal axis is conformable with the axis (12), said connecting organ (64) being turnable on said hub (47).

4. Agricultural machine as claimed in claim 3, characterized by the fact that the first portion (10) has a hub (27) centered in the interior of the hub (47) of the second portion (11), and that the connecting organ (64) is centered on the exterior of said hub (47) of the second portion (11).

5. Agricultural machine as claimed in any one of the preceding claims, characterized by the fact that the two input shafts (15, 23) are supported by two opposite faces of the first portion (10).

6. Agricultural machine as claimed in claim 5, characterized by the fact that the two input shafts (15, 23) are approximately in extension one of the other.

7. Agricultural machine as claimed in any one of the preceding claims, characterized by the fact that the two input shafts (15, 23) have different profiles.

8. Agricultural machine as claimed in any one of the preceding claims, characterized by the fact that the first transmission organs comprise a first conical coupling (36, 38) and that the second transmission organs comprise a second conical coupling (37, 39), said first conical coupling (36, 38) transmitting the movement between the first input shaft (15) and an intermediate shaft (41), and said second conical coupling (37, 39) transmitting the movement between the second input shaft (23) and said intermediate shaft (41), said intermediate shaft (41) having a rotation axis conformable with the geometrical axis (12) and being common to the first and second transmission organs.

9. Agricultural machine as claimed in claim 8, characterized by the fact that the driven bevel wheels (38, 39) are arranged on the intermediate shaft (41) one above the other.

10. Agricultural machine as claimed in claim 8 or 9, characterized by the fact that the intermediate shaft (41) turns approximately with the same speed independently of the input shaft (15 or 23) which receives the movement.

11. Agricultural machine as claimed in claim 10, characterized by the fact that the intermediate shaft (41) turns at about 740 RPM when the output shaft (17) turns at about 1 000 RPM.

12. Agricultural machine as claimed in any one of the preceding claims, characterized by the fact that it comprises a crutch (76) connected to the first portion (10).

13. Agricultural machine as claimed in any one of the preceding claims, characterized by the fact that it comprises a crutch (76) wich, in rised position, serves as a protection means of the input shaft (15 or 23) which does not work.

14. Agricultural machine as claimed in any one of the preceding claims, characterized by the fact that the connection between the output shaft (17) and the entrance shaft (21) of the driving housing (22) equiping the body (8) of the machine (2) is made by means of two transmission shafts (18, 20), one of which being supported by the drawbar (3).

15. Agricultural machine as claimed in claim 14, characterized by the fact that the length of said transmission shafts (18 and 20) is approximately the same.


**Patentansprüche**

1. Landmaschine (2) mit Arbeitsorganen (13), die von der Zapfwelle (14) eines Schleppers (1) mittels einer Antriebsvorrichtung (9) angetrieben sind, welche aus zwei Teilen (10, 11) besteht, die eines gegenüber dem anderen um eine geometrische nach oben gerichtete Achse (12) drehen können, und von denen das primäre Teil (10) mit einer primären Deichsel (4), die dazu bestimmt ist mit dem Schlepper (1) verbunden zu werden, und das sekundäre Teil (11) mit einer sekundären Deichsel (7), die mit dem Körper (8) der Landmaschine (2) verbunden ist, verbunden sind, wobei das primäre Teil (10) eine Eingangswelle (15) trägt, die mittels einer Antriebswelle (16) durch die Zapfwelle (14) angetrieben und mittels Getriebeorganen (36, 38, 41, 55, 54) mit einer Ausgangswelle (17) verbunden ist, wobei die Ausgangswelle (17) mit den Arbeitsorganen (13) der Maschine (2) mittels Getriebeorganen (18, 20, 21, 22) verbunden ist, dadurch gekennzeichnet, dass das primäre Teil (10) eine zweite Eingangswelle (23) trägt, die ebenfalls mit der Ausgangswelle (17) mittels zweiter Getriebeorganen (37, 39, 41, 55, 54) verbunden ist, wobei diese zweite Eingangswelle (23) dazu bestimmt ist durch eine Zapfwelle (14) angetrieben zu werden, welche nicht die gleiche ist als die Zapfwelle (14) von der aus die erste Eingangswelle (15) bestimmt ist angetrieben zu werden, wobei die ersten Getriebeorgane (36, 38, 41, 55, 54) und die zweiten Getriebeorgane (37, 39, 41, 55, 54) dergestalt sind, dass die Ausgangswelle (17) etwa mit der gleichen Geschwindigkeit dreht, unabhängig von der Eingangswelle (15 oder 23), die angetrieben wird, dass das primäre Teil (10) und die primäre Deichsel (4) mittels zylindrischer Verbindungsorganen (64, 65, 66, 47, 27), die eine geometrische Achse aufweisen, die gleich mit der geometrischen Achse : (12) ist, miteinander verbunden sind, so dass das primäre Teil (10) und die primäre Deichsel (4) eines gegenüber dem anderen um die geometrische Achse (12) drehen können, dass Verriegelungsorgane (67, 68, 69, 70) die Relativbewegung zwischen dem primären Teil (10) und der primären Deichsel (4) während der Arbeit verhindern, und dass die Eingangswelle (15, 23), die mittels der Antriebswelle (16) die von der Zapfwelle (14) anzutreiben ist durch Drehung des primären Teils (10) um die geometrische Achse (12), in Arbeitsposition in Bezug zur Antriebswelle (16) gebracht wird, wobei diese Arbeitsposition der Eingangswelle (15, 23), die anzutreiben ist, durch die Verriegelungsorgane (67, 68, 69, 70) bestimmt ist.

2. Landmaschine nach Anspruch 1, dadurch gekennzeichnet, dass die Arbeitsposition der zweiten Eingangswelle (23) etwa die gleiche ist als die der ersten Eingangswelle (15).

3. Landmaschine nach Anspruch 1 oder 2, dadurch gekennzeichnet, dass das primäre Teil (10) und die primäre Deichsel (4) mittels eines Verbindungsorganes (64) verbunden sind, welches auf einer mit dem sekundären Teil (11) verbundenen Nabe (47) zentriert ist, deren Längsachse gleich mit der Achse (12) ist, wobei das Verbindungsorgan (64) auf dieser Nabe (47) drehen kann.

4. Landmaschine nach Anspruch 3, dadurch gekennzeichnet, dass das primäre Teil (10) mit einer Nabe (27) versehen ist, die in dem Inneren der Nabe (47) des sekundären Teiles (11) zentriert ist, und dass das Verbindungsorgan (64) auf dem Äusseren der Nabe (47) des sekundären Teiles (11) zentriert ist.

5. Landmaschine nach einem der vorhergehenden Ansprüche, dadurch gekennzeichnet, dass die zwei Eingangswellen (15, 23) durch zwei entgegengesetzte Seiten des primären Teiles (10) getragen sind.

6. Landmaschine nach Anspruch 5, dadurch gekennzeichnet, dass die beiden Eingangswellen (15, 23) etwa eine in der Verlängerung der anderen stehen.

7. Landmaschine nach einem der vorhergehenden Ansprüche, dadurch gekennzeichnet, dass die beiden Eingangswellen (15, 23) ein verschiedenes Profil aufweisen.

8. Landmaschine nach einem der vorhergehenden Ansprüche, dadurch gekennzeichnet, dass die ersten Getriebeorgane mit einem ersten Kegelräderpaar (36, 38) und die zweiten Getriebeorgane mit einem zweiten Kegelräderpaar (37, 39) versehen sind, wobei das erste Kegelräderpaar (36, 38) den Antrieb zwischen der ersten Eingangswelle (15) und einer Zwischenwelle (41) und das zweite Kegelräderpaar (37, 39) den Antrieb zwischen der zweiten Eingangswelle (23) und der Zwischenwelle (41) übertragen, wobei diese Zwischenwelle (41) den ersten und den zweiten Getriebeorganen gemein ist und eine Drehachse aufweist, die gleich mit der geometrischen Achse (12) ist.

9. Landmaschine nach Anspruch 8, dadurch gekennzeichnet dass die angetriebenen Kegelräder (38, 39) auf der Zwischenwelle (41) eines über dem anderen angeordnet sind.

10. Landmaschine nach einem der Ansprüche 8 oder 9, dadurch gekennzeichnet, dass die Zwischenwelle (41) etwa mit der gleichen Geschwindigkeit dreht unabhängig von der Eingangswelle (15 oder 23) die angetrieben ist.

11. Landmaschine nach Anspruch 10, dadurch gekennzeichnet, dass die Zwischenwelle (41) etwas mit 740 Umdrehungen pro Minute dreht wenn die Ausgangswelle (17) etwa mit 1 000 Umdrehungen pro Minute dreht.

12. Landmaschine nach einem der vorhergehenden Ansprüche, dadurch gekennzeichnet, dass sie mit einer Stütze (76) versehen ist, die auf dem primären Teil (10) befestigt ist.

13. Landmaschine nach einem der vorhergehenden Ansprüche, dadurch gekennzeichnet, dass sie mit einer Stütze (76) versehen ist, die, in hochgeklappter Stellung, der Eingangswelle (15 oder 23), die nicht arbeitet, als Schutz dient.

14. Landmaschine nach einem der vorhergehenden Ansprüche, dadurch gekennzeichnet, dass die Ausgangswelle (17) und die Eingangswelle (21) des Getriebegehäuses (22), das dem Körper (8) der Maschine (2) zugeordnet ist, mittels zweier Antriebswellen (18, 20) verbunden sind, von denen eine von der Deichsel (3) getragen ist.

15. Landmaschine nach Anspruch 14, dadurch gekennzeichnet, dass die Länge der Antriebswellen (18 und 20) etwa die gleiche ist.

Fig.1

A

0 124 462

Fig. 2

0 124 462

Fig.5

Fig.3

9

4

6

24

25

3

64

70

11

10

80

83

26

79

76

82

77

6

24

25

A

A

9

16

72

73

74

75

6

23

43

28

10

26

27

4

39

38

41

37

46

58

55

11

47

64

70

67

69

60

12

0 124 462

18

7

Fig. 4

0 124 462